(19) **Europäisches Patentamt / European Patent Office / Office européen des brevets**

(11) **EP 3 995 246 B1**

(12) **EUROPEAN PATENT SPECIFICATION**

(45) Date of publication and mention
of the grant of the patent:
**30.10.2024 Bulletin 2024/44**

(21) Application number: **20868243.5**

(22) Date of filing: **27.07.2020**

(51) International Patent Classification (IPC):
***B23K 11/11*** *(2006.01)*

(52) Cooperative Patent Classification (CPC):
**B23K 11/115; B23K 11/16; B23K 11/166;**
B23K 2101/006; B23K 2101/18; B23K 2101/34;
B23K 2103/04

(86) International application number:
**PCT/JP2020/028615**

(87) International publication number:
**WO 2021/059720 (01.04.2021 Gazette 2021/13)**

(54) **METHOD OF MANUFACTURING RESISTANCE SPOT WELDED JOINT**

VERFAHREN ZUR HERSTELLUNG EINER WIDERSTANDPUNKTSCHWEISSVERBINDUNG

PROCÉDÉ DE SOUDAGE PAR POINTS PAR RÉSISTANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.09.2019 JP 2019176780**

(43) Date of publication of application:
**11.05.2022 Bulletin 2022/19**

(73) Proprietor: **JFE Steel Corporation
Tokyo 100-0011 (JP)**

(72) Inventors:
• **KAWABE, Nao
Tokyo 100-0011 (JP)**

• **MATSUDA, Hiroshi
Tokyo 100-0011 (JP)**

(74) Representative: **Hoffmann Eitle
Patent- und Rechtsanwälte PartmbB
Arabellastraße 30
81925 München (DE)**

(56) References cited:
**WO-A1-2016/174842**

• **No further relevant documents disclosed**

**Description**

Technical Field

The present invention relates to a resistance spot welding method and a method for producing a resistance spot weld joint.

Background Art

Resistance spot welding is widely used in assembly of vehicle bodies, such as automobile bodies. The assembly of a single automobile body requires resistance spot welding at thousands of points. Resistance spot welding involves passing a current through, while applying pressure to, two or more steel sheets that are placed on top of each other and clamped by a pair of welding electrodes disposed on the upper and lower sides of the steel sheets, respectively. This forms a nugget of a predetermined size at the interface of the steel sheets, joins the steel sheets together, and produces a weld joint.

In recent years, from the viewpoint of environmental protection, there has been demand for reduced $CO_2$ emissions from automobiles. In an effort to achieve light weight and thus to improve fuel efficiency of automobiles, high strength steel sheets have been used to reduce wall thickness of automobile bodies. The enhanced strength of high strength steel sheets is generally achieved by addition of various alloy elements, as well as a large amount of C, and this leads to increased sensitivity to hydrogen embrittlement. In resistance spot welding, for example, rust preventive oil, moisture, and a coated layer on the steel sheet surface enter a weld metal (molten portion) during the process of melting and solidification in welding, and remain, after cooling, as a hydrogen source that causes the occurrence of delayed fracture.

Therefore, when high strength steel sheets are welded by resistance spot welding, the weld of the resulting weld joint may suffer delayed fracture due to the entry of hydrogen, during welding, into the weld metal that is highly sensitive to hydrogen embrittlement.

The following patent literatures disclose methods for preventing delayed fracture in welds. For example, Patent Literature 1 discloses a technique in which immediately after passage of welding current (main welding), the welding force is increased and the current is decreased to control residual stress in welds and thereby prevent delayed fracture. Also, for example, Patent Literature 2 discloses a technique in which the welding force is increased immediately after passage of welding current (main welding) and the current is passed after a cooling period during which there is no current passage, in such a way as to control the microstructure and hardness of welds and thereby prevent delayed fracture.

Citation List

Patent Literature

   PTL 1: Japanese Unexamined Patent Application Publication No. 2015-93282
   PTL 2: International Publication No. 2014/171495

Summary of Invention

Further related art may be found in WO2016174842A1 which describes a resistance spot welding method.

Technical Problem

As described above, resistance spot welding of high strength steel sheets has a problem in that hydrogen enters the weld metal. In resistance spot welding of high strength steel sheets, therefore, it is important not only to improve the strength of the weld joint, but also to reduce the amount of residual hydrogen in the weld to prevent delayed fracture.

However, the techniques disclosed in Patent Literature 1 and Patent Literature 2 do not involve reducing the amount of hydrogen in the weld to prevent delayed fracture. Also, these techniques have problems in that if the welding force is excessively increased when the nugget is in a molten state immediately after passage of welding current, the sheet thickness at the weld tends to decrease and this may reduce the strength of the resulting weld joint or may affect the appearance of the weld.

The problem of delayed fracture caused by entry of hydrogen, during welding, into the weld metal that is highly sensitive to hydrogen embrittlement, exists not only in the case of resistance spot welding of high strength steel sheets for automobiles, but also in the case of resistance spot welding of other types of steel sheets.

The present invention has been made in view of the problems described above. An object of the present invention is to provide a resistance spot welding method and a method for producing a resistance spot weld joint that make it possible to stably form a nugget having a large diameter, as well as to suppress delayed fracture in the weld.

Solution to Problem

The present invention is defined by appended independent claim. The dependent claim describes optional features and distinct embodiments.

To suppress delayed fracture in a weld joint obtained by resistance spot welding of high strength steel sheets having a high tensile strength, the present inventors studied the hydrogen behavior of entering the weld metal during welding, that is, the behavior which would cause the occurrence of delayed fracture. The following findings were obtained.

As described above, first, hydrogen enters the weld during welding. Since hydrogen diffuses more slowly at lower temperatures, rapid cooling after welding allows a large proportion of hydrogen to remain in the nugget without diffusing. Then, as time proceeds, hydrogen collects at a portion where large tensile stress concentrates, such as a notched end portion of the nugget. This results in delayed fracture.

An effective way to suppress delayed fracture is to release more hydrogen from the nugget during welding and reduce the amount of residual hydrogen in the nugget.

Accordingly, the present inventors tried to identify preferred conditions for resistance spot welding under which the amount of residual hydrogen in the weld can be reduced. The results will be given below.

In a welding process, by producing spatter first at the interface of steel sheets, a hydrogen source present at the interface of the steel sheets can be discharged with spatter. It was found that this reduces mixing of hydrogen into the nugget in later stages of the welding process and improves resistance of the weld joint to delayed fracture. However, if spatter occurs in later stages of the welding process, it is difficult to reduce hydrogen mixed into the nugget before the occurrence of spatter. This may hinder suppression of delayed fracture, affect the growth of the nugget, and make it difficult to provide a large nugget diameter.

Accordingly, the welding process was divided into two steps: a first welding step (or initial welding step described below) intended to produce spatter, and a second welding step (or main welding step described below) intended to form a nugget after the first welding step. This enabled spatter to be produced at the initial stage of the welding process, and made it possible to suppress spatter at later stages of the welding process.

Also, contact resistance at the interface of steel sheets in the initial stage of the welding process was used to selectively melt only a portion near the steel sheet surface where a hydrogen source was present, so as to produce spatter of a minimum level necessary. This enabled efficient release of hydrogen. It was then found that to achieve this, it was important to appropriately control the welding force and the current value in the first welding step (initial welding step).

By setting the first welding step (initial welding step) described above, moisture and oil content present at the interface of steel sheets, or adhering substances such as soils, were discharged together with spatter. As the result, it was possible to keep the interface of steel sheets clean, and moderately soften the steel sheets with heat by passing current therethrough before formation of a nugget. This made it possible to maintain good contact between steel sheets and it was found that the effect of improving resistance to delayed fracture was achieved. Additionally, it was found that in the second welding step (main welding step), the effect of stably forming a nugget having a large diameter was also achievable.

The present invention has been made on the basis of the findings described above and is defined in claim 1.

A further optional feature is defined in claim 2.

Advantageous Effects of Invention

The present invention has high industrial advantages in that it enables stable formation of a large diameter nugget, as well as suppression of delayed fracture in the weld.

Brief Description of Drawings

[Fig. 1] Fig. 1 is a cross-sectional view schematically illustrating resistance spot welding according to an embodiment of the present invention.

[Fig. 2] Fig. 2(a) and Fig. 2(b) are diagrams illustrating an exemplary weld joint used in Examples of the present invention, Fig. 2(a) being a plan view of the weld joint, Fig. 2(b) being a lateral view of the weld joint. Description of Embodiments

Hereinafter, a resistance spot welding method and a method for producing a resistance spot weld joint according to the present invention will be described with reference to the drawings. The present invention is not limited to the embodiments to be described.

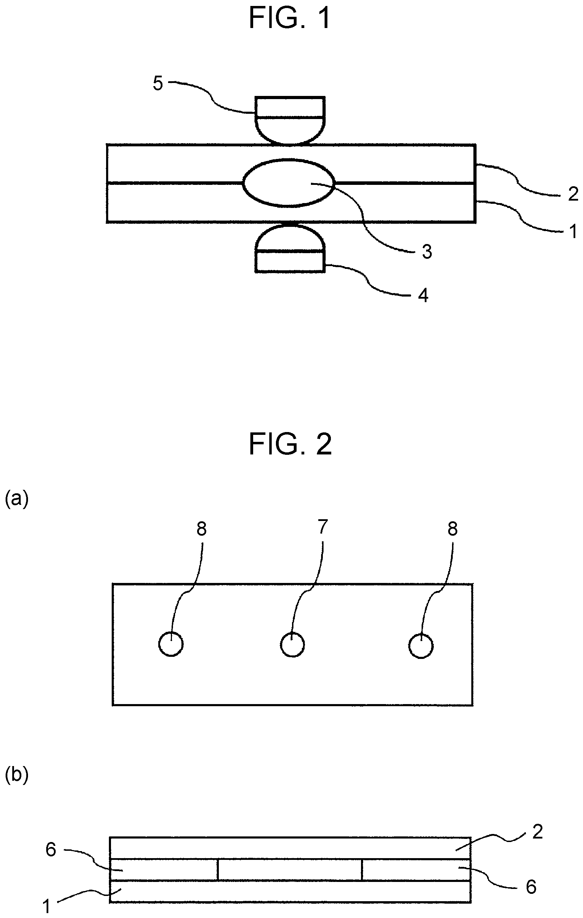

First, a resistance spot welding method according to the present invention will be described with reference to Fig. 1.

The present invention provides a technique in which two or more steel sheets are joined by resistance spot welding. Fig. 1 schematically illustrates an exemplary resistance spot welding method. Fig. 1 illustrates an example in which resistance spot welding is performed on two steel sheets.

First, two or more steel sheets are placed on top of each other. In the example illustrated in Fig. 1, two steel sheets including a steel sheet (which may hereinafter be referred to as a lower steel sheet 1) on the lower side and a steel sheet (which may hereinafter be referred to as an upper steel sheet 2) on the upper side, are placed on top of each other to form a set of steel sheets to be welded.

Next, the steel sheets (the lower steel sheet 1 and the upper steel sheet 2) on top of each other are clamped by a pair of welding electrodes (electrodes) 4 and 5 disposed on the lower and upper sides of the steel sheets, respectively. A current is then passed through the lower steel sheet 1 and the upper steel sheet 2 in a predetermined pattern (described below) while pressure is being applied thereto. In the example illustrated in Fig. 1, the electrode disposed on the lower side of the steel sheets is referred to as a lower electrode 4, and the electrode disposed on the upper side of the steel sheets is referred to as an upper electrode 5.

With the steel sheets on top of each other being clamped by the pair of welding electrodes 4 and 5, a nugget 3 of a required size is formed by resistive heating by passing a current through the steel sheets on top of each other while applying pressure thereto, and the steel sheets on top of each other are joined together so that a weld joint is obtained. While not shown, in the present invention, three or more steel sheets placed on top of each other may be welded by resistance spot welding. In this case also, a weld joint can be obtained by the same welding method as that described above.

An apparatus used to implement the resistance spot welding method according to the present invention is not limited to a particular type. The apparatus may have any configuration as long as it is capable of applying pressure by the lower electrode 4 and the upper electrode 5 and controlling the welding force applied by the lower electrode 4 and the upper electrode 5. For example, a conventionally known device, such as an air cylinder or a servomotor, may be used. A configuration of supplying current during welding and controlling the current value is also not particularly limited, and a conventionally known device may be used. The present invention is applicable both in the case of direct current and alternating current. In the case of using alternating current, the term "current" refers to "effective current".

The shape of the tip of the lower electrode 4 and the upper electrode 5 is not limited to a particular one. Examples of the electrode tip shape include a dome-radius (DR) shape, a radius (R) shape, and a dome (D) shape described in JIS C 9304: 1999. The tip diameter of the lower electrode 4 and the upper electrode 5 is, for example, from 4 mm to 16 mm. Resistance spot welding is performed while the electrodes are being continuously cooled by water.

In the present invention, the steel type of steel sheets to be resistance spot welded is not limited to a particular one. At least one of the steel sheets to be placed on top of each other is a high strength steel sheet having a tensile strength of 980 MPa or higher. This is because delayed fracture in resistance spot welds tends to be a problem particularly in high strength steel sheets having a tensile strength of 980 MPa or higher. This means that advantageous effects of the present invention are of particular benefit to a case of using such high strength steel sheets.

The sheet thickness of steel sheets to be resistance spot welded is not particularly limited. For example, the sheet thickness is preferably 0.5 mm or more and 3.0 mm or less. This is because steel sheets having a sheet thickness within this range can be suitably used as automobile components.

The steel sheets to be resistance spot welded may each be plated to have a coated layer on the surface thereof. Examples of plating that can be used in the present invention include Zn plating and Al plating. Examples of Zn plating include hot-dip galvanization (GI), Zn-Ni plating, and Zn-Al plating. Examples of Al plating include Al-Si plating (e.g., Al-Si plating containing 10% to 20% Si by mass). The hot-dipped layer may be an alloyed hot-dipped layer. Examples of the alloyed hot-dipped layer include a galvannealed (GA) layer.

The two or more steel sheets to be resistance spot welded may either be same or different. That is, the steel sheets may be of the same type and shape, or may be of different types and shapes. A surface-treated steel sheet having a coated layer and a steel sheet having no coated layer may be placed on top of each other.

A pattern of passing a current in the resistance spot welding method according to the present invention will now be described.

The present invention provides a resistance spot welding method for joining two or more steel sheets that include at least one steel sheet having a tensile strength of 980 MPa or higher. The resistance spot welding method involves placing the steel sheets on top of each other to form a set of steel sheets to be welded, clamping the set of steel sheets to be welded with a pair of electrodes, and passing a current through the steel sheets while applying pressure thereto to form a nugget and join the steel sheets placed on top of each other (i.e., steel sheets to be welded) together. In the example illustrated in Fig. 1, the steel sheets 1 and 2 clamped by the lower electrode 4 and the upper electrode 5 are welded by passing a current therethrough in a particular pattern while applying pressure thereto. The welding of the present invention includes an initial welding step and a main welding step intended to form a nugget having a predetermined nugget diameter.

First, the initial welding step produces spatter in the initial welding step by performing control such that a current $I_1$ (kA) satisfying relation (2) (described below) is passed while a welding force Fi (kN) satisfying relation (1) (described below) is being applied. That is, in the initial welding step, a hydrogen source present at the interface of the steel sheets is discharged together with spatter, and good contact between the steel sheets is maintained.

In the present invention, it is important to produce spatter in the initial welding step. If spatter occurs in any step (e.g., a cooling step or a main welding step described below) that follows the initial welding step, a large amount of hydrogen is mixed into the nugget before occurrence of the spatter. Since this makes it difficult to achieve a hydrogen reducing effect expected from the occurrence of spatter, a delayed fracture suppressing effect cannot be achieved. An effective way to enhance the hydrogen reducing effect is to reduce the welding time preceding the occurrence of spatter and minimize the entry of hydrogen.

In the present invention, it is preferable to produce spatter within 100 ms of the start of welding in the initial welding step. The minimum time from the start of welding to the occurrence of spatter is 20 ms or more.

To stably form a large diameter nugget in the main welding step described below, it is preferable that the spatter produced in the initial welding step be low-level spatter (which may hereinafter be referred to as minor spatter). Since the occurrence of spatter reduces interelectrode resistance, a voltage drop appears as a measured value when a voltage between electrodes is measured in resistance spot welding. In the present invention, the level of spatter can be controlled by controlling the amount of voltage drop at the occurrence of spatter. Specifically, the current value and the welding force in the initial welding step are preferably set such that an interelectrode voltage (welding voltage) Vs (V) at the time of occurrence of spatter satisfies the following non-claimed relation (4):

$$Vs \geq 0.7 \times Va \quad \cdots \quad (4)$$

where Va is an interelectrode voltage (welding voltage) (V) 5 ms before the occurrence of spatter, and Vs is an interelectrode voltage (welding voltage) (V) at the time of occurrence of spatter. The spatter produced in welding that satisfies relation (4) refers to minor spatter in the present invention.

If the interelectrode voltage Vs (V) at the time of occurrence of spatter is less than (0.7 × Va), the level of spatter is too large to maintain good welding conditions in the main welding step. A nugget having a large nugget diameter (which may hereinafter be referred to as "diameter") cannot be stably formed in this case. It is thus preferable but not claimed that the interelectrode voltage Vs (V) at the time of occurrence of spatter be (0.7 × Va) or more. Minimizing the level of spatter is an effective way to maintain good contact between the steel sheets and enhance the effect of stably forming a large diameter nugget in the main welding step. Therefore, it is according to the invention that the interelectrode voltage Vs (V) at the time of occurrence of spatter be (0.8 × Va) or more. As described above, an interelectrode voltage generally drops when spatter occurs in spot welding. That is, there is no chance that the occurrence of spatter will increase the interelectrode voltage. It is thus unlikely that the interelectrode voltage Vs (V) will be (1.0 × Va) or more in relation (4). Accordingly, it is preferable that the interelectrode voltage Vs (V) be less than (1.0 × Va).

The initial welding step, described above, is followed by the main welding step that is intended to form a nugget having a predetermined diameter. Current passing conditions, such as a current value and a welding time, and pressure application conditions for forming such a nugget in the main welding step, are not particularly limited. Conventional welding conditions can be used here.

For example, to form a nugget having an appropriate diameter, a current value in the main welding step is preferably 1.0 kA or more and 15.0 kA or less, and a welding force in the main welding step is preferably 1.0 kN or more and 9.0 kN or less. A welding time in the main welding step is preferably 100 ms or more and 1000 ms or less. The main welding step may be a step in which the current value and the welding force are varied in multiple stages.

For cooling a molten nugget, the main welding step may be followed by a retaining step which involves retaining pressure without passing current. Although the duration of the retaining step is not specified here, it is preferable that the duration of the retaining step be in the range of 20 ms to 1000 ms as in a typical resistance spot welding process.

In the present invention, a nugget having a predetermined nugget diameter is preferably a nugget that has a nugget diameter of 3√t to 6√t (t: sheet thickness) (mm). When steel sheets of different sheet thicknesses are placed on top of each other and welded, the sheet thickness of a thinner one of two adjacent steel sheets to be joined is represented by the letter "t" described above.

In the present invention, a cooling step (described below) may be added between the initial welding step and the main welding step.

Welding conditions in the initial welding step for implementing the resistance spot welding method of the present invention will now be described in detail. In the initial welding step, the welding force Fi (kN) and the current $I_1$ (kA) are set to satisfy relation (1) and relation (2) :

$$0.2 \times \sqrt{t_1} < F_1 \leq 4 \times \sqrt{t_1} \quad \cdots \quad (1)$$

$$2 \times \sqrt{F_1} < I_1 \leq 10 \times \sqrt{F_1} \quad \cdots \quad (2)$$

where ti is a total sheet thickness (mm) of steel sheets to be welded.

The conditions described above are necessary in the initial welding step to discharge, as spatter, some portion melted by contact resistance near the interface of steel sheets.

If the welding force Fi (kN) is ($0.2 \times \sqrt{t_1}$) or less, the welding force is too small to control the melting heat generated by passage of current. This causes spatter of an extremely high level, and makes it difficult to stably form a large nugget in the main welding step that follows. If the welding force Fi (kN) exceeds ($4 \times \sqrt{t_1}$), it is difficult to discharge, as spatter, some portion melted by contact resistance. This means that the effect of suppressing delayed fracture cannot be achieved. Although application of high current may produce spatter, the level of the spatter is extremely high in this case. This makes it difficult to stably form a large nugget in the main welding step that follows.

If the current $I_1$ (kA) is ($2 \times \sqrt{F_1}$) or less, it is difficult to produce spatter, and the effect of suppressing delayed fracture cannot be achieved. If the current $I_1$ (kA) exceeds ($10 \times \sqrt{F_1}$), the resulting occurrence of extremely large spatter makes it difficult to stably form a large diameter nugget in the main welding step that follows. To enhance the effect of suppressing delayed fracture and the effect of stably forming a large diameter nugget in the main welding step that follows, it is preferable to set the welding force Fi (kN) and the current $I_1$ (kA) to satisfy relation (5) and relation (6):

$$0.5 \times \sqrt{t_1} < F_1 \leq 2 \times \sqrt{t_1} \quad \cdots \quad (5)$$

$$3 \times \sqrt{F_1} < I_1 \leq 8 \times \sqrt{F_1} \, . \cdots \quad (6)$$

The welding time in the initial welding step is, according to the invention, 20 ms or more and within 100 ms. If the welding time is less than 10 ms, the welding time is too short to stably produce spatter, and the effect of suppressing delayed fracture cannot be stably achieved. Generation of heat from contact resistance generally takes place in the early stage of welding. In the present invention, spatter is produced in the stage of generation of heat from contact resistance. In this case, a prolonged process of welding after the occurrence of spatter not only causes an unnecessary increase in welding time, but also leads to the occurrence of a high level of spatter. For these reasons, the welding time is preferably 20 ms or more and within 100 ms.

In the present invention, a cooling step may be added between the initial passing current step and the main welding step. The cooling step involves welding at a current $I_c$ (kA) satisfying relation (3) to stabilize the contact between steel sheets:

$$0 \leq I_c \leq I_1 \quad \cdots \quad (3)$$

where $I_c$ is a current (kA) in the cooling step and $I_1$ is a current (kA) in the initial welding step.

By adding the cooling step, the state of contact between steel sheets temporarily disturbed by spatter can be stabilized again. This ensures more stable formation of a nugget in the main welding step that follows. If the current $I_c$ (kA) in the cooling step exceeds the current $I_1$ (kA) in the initial welding step, the chance of occurrence of spatter in the cooling step increases, and the effect of maintaining the state of contact between steel sheets may not be achieved. The cooling step is intended to stabilize the state of contact between steel sheets without producing spatter in the cooling step. If the current $I_c$ in the cooling step simply satisfies relation (3), the passing current pattern in the cooling step is not limited to a particular one, and may be a non-passing current step involving no passage of current, a multi-stage passing current step, or a downslope passing current step. The current $I_c$ (kA) in the cooling step is more preferably ($0.5 \times I_1$) kA or less.

The duration of the cooling step is preferably 500 ms or less. If passing current is performed for longer than 500 ms in the cooling step, the resulting increase in overall duration of the welding process may lead to low productivity. The duration of the cooling step is more preferably 300 ms or less, and more preferably 20 ms or more.

A method for producing a resistance spot weld joint will now be described.

The present invention provides a method for producing a resistance spot weld joint using the resistance spot welding method described above. In the method for producing a resistance spot weld joint according to the present invention, for example, two or more steel sheets including at least one steel sheet having a tensile strength of 980 MPa or higher are placed on top of each other, clamped by a pair of welding electrodes, and resistance spot welded to form a nugget of a required size by passing a current through, while applying pressure to, the steel sheets under the welding conditions for each of the steps described above and a resistance spot weld joint is produced. The steel sheets, the welding conditions and so on will not be described here, as they are the same as those described above.

As described above, the present invention makes it possible to suppress delayed fracture in welds. Also, since low-level spatter satisfying the interelectrode voltage condition, described above, is produced in the initial welding step, a nugget having a large diameter can be stably formed in the main welding step that follows.

Also, the present invention makes it possible to effectively suppress entry of hydrogen into weld metal that is highly sensitive to hydrogen embrittlement. Therefore, the advantageous effects described above are achieved not only in resistance spot welding of high strength steel sheets for automobiles, but also in resistance spot welding of other types of steel sheets.

Examples

The operations and effects of the present invention will now be described using Examples. Note that the present invention is not limited to Examples described below.

In Examples of the present invention, as described with reference to Fig. 1, the lower steel sheet 1 and the upper steel sheet 2 were placed on top of each other and welded by resistance spot welding. The resistance spot welding was performed at room temperature, with the lower electrode 4 and the upper electrode 5 being continuously cooled by water. The lower electrode 4 and the upper electrode 5 used here were DR chromium copper electrodes both having a diameter (tip diameter) of 6 mm and a curvature radius of 40 mm at the tip. The lower electrode 4 and the upper electrode 5 were driven by a servomotor to control the welding force, and an alternating-current power supply with a frequency of 50 Hz was used in welding.

Steel sheets to be welded were of three steel types as follows:

[Steel Type I] A non-plated steel sheet with a tensile strength of 1470 MPa, 100 mm long on the longer side, 30 mm long on the shorter side, and 1.0 mm in sheet thickness;

[Steel Type II] A steel sheet with a tensile strength of 1470 MPa, 100 mm long on the longer side, 30 mm long on the shorter side, 1.6 mm in sheet thickness, and plated (hot-dip galvanized (GI) with a coating weight of 50 g/m$^2$ on one side); and

[Steel Type III] A steel sheet with a tensile strength of 1320 MPa, 100 mm long on the longer side, 30 mm long on the shorter side, 2.0 mm in sheet thickness, and plated (hot-dip galvanized (GI) with a coating weight of 50 g/m$^2$ on one side).

A weld joint used in a test will be described with reference to Fig. 2(a) and Fig. 2(b).

Fig. 2(a) is a plan view of a weld joint and Fig. 2(b) is a lateral view of the weld joint. In resistance spot welding, as illustrated in Fig. 2(a) and Fig. 2(b), the two steel sheets 1 and 2 (100 mm long on the longer side and 30 mm long on the shorter side) of the steel types described above were tack welded, with spacers 6 interposed therebetween on both sides. The spacers 6 are 1.6 mm thick and 30 mm long on all four sides. Then, the two steel sheets placed on top of each other to form a sheet set were welded at the center under the conditions shown in Table 1. As illustrated in Fig. 2(a), the sheet set was tack welded at tack weld points 8 at both ends thereof, and welded at a weld point 7 in the center thereof.

Welding was performed by adjusting the current value such that the nugget diameter was about 3.5Vt (t: sheet thickness (mm)) (mm) in all examples and comparative examples. Welding of 1.6 mm thick steel sheets provides a nugget diameter of 3.5Vt = 4.43 mm. For welding of steel sheets of different sheet thicknesses, the current value was adjusted such that the nugget diameter was 3.5√t, on the basis of the sheet thickness of a thinner steel sheet.

Delayed fracture characteristics and nugget stability were evaluated by the method described below.

Delayed fracture characteristics were evaluated in the following manner.

In the delayed fracture test, each weld joint obtained was left to stand in the atmosphere at room temperature (20°C) for 24 hours. Then, the weld was checked for delayed fracture. Welding was performed with n = 3 in all examples and comparative examples. Referring to Table 2, the weld joints exhibiting no delayed fracture after being left to stand for 24 hours are indicated by the symbol "O", whereas the weld joints exhibiting delayed fracture are indicated by the

symbol "$\times$".

As for the determination of delayed fracture characteristics, if split of a nugget (or phenomenon of splitting of a nugget into two at the interface) was visually observed after welding, the weld joint was determined to have delayed fracture. The final determination of delayed fracture characteristics is shown in Table 2. As shown, a set of conditions under which none of the three weld joints (n = 3) had delayed fracture is indicated as "A (excellent)", whereas a set of conditions under which at least one of the three weld joints (n = 3) had delayed fracture is indicated as "B (fail)".

By using the same specimens as those described above, nugget stability was evaluated in the following manner.

Each weld joint obtained was cut at the center of the weld and etched by applying a picric acid aqueous solution to the cross section. Then, the length of the microstructure of the etched nugget was measured to calculate the nugget diameter. The nugget diameter was calculated with n = 3 in all the conditions. Referring to Table 2, the weld joints with a nugget diameter of 3.5Vt or more are indicated by the symbol "O", whereas the weld joints with a nugget diameter of less than 3.5Vt are indicated by the symbol "$\times$".

The determination of nugget stability is shown in Table 2. As shown, a set of conditions under which all the three weld joints (n = 3) had a nugget diameter of 3.5Vt or more is indicated as "A (excellent)", whereas a set of conditions under which at least one of the three weld joints (n = 3) had a nugget diameter of less than 3.5Vt is indicated as "B (fail) ".

[Table 1]

| No. | Upper Sheet | Lower Sheet | Initial Welding Step | | | Cooling Step | | Main Welding Step | | | Retaining Step | Step where Spatter Occurred | Spatter Behavior | | Remarks |
|---|---|---|---|---|---|---|---|---|---|---|---|---|---|---|---|
| | | | Welding Force $F_1$ (kN) | Current $I_i$ (kA) | Welding Time (ms) | Current $I_c$ (kA) | Cooling Time (ms) | Welding Force (kN) | Current $I_2$ (kA) | Welding Time (ms) | Retention Time (ms) | | Time from Welding Start to Spatter Occurrence (ms) | Voltage Drop Vs/Va | |
| 1 | I | I | 1.0 | 6.0 | 80 | 0.0 | 60 | 3.0 | 6.8 | 300 | 20 | Initial Welding Step | 40 | 0.9 | Example of Invention |
| 2 | I | I | 1.0 | 6.0 | 80 | 0.0 | 60 | 3.0 | 6.8 | 300 | 100 | Initial Welding Step | 40 | 0.9 | Example of Invention |
| 3 | I | I | 1.0 | 12.0 | 80 | 0.0 | 60 | 3.0 | 6.8 | 300 | 20 | Initial Welding Step | 40 | 0.6 | Comparative Example |
| 4 | I | I | 1.0 | 6.0 | 80 | Downslope | 100 | 3.0 | 6.8 | 300 | 20 | Initial Welding Step | 40 | 0.9 | Example of Invention |
| 5 | I | I | 3.0 | 9.0 | 80 | - | - | 3.0 | 6.8 | 300 | 20 | Initial Welding Step | 40 | 0.9 | Example of Invention |
| 6 | I | I | 3.0 | 3.0 | 80 | - | - | 3.0 | 6.8 | 300 | 20 | - | No spatter | - | Comparative Example |
| 7 | I | I | 0.6 | 9.0 | 100 | - | - | 3.0 | 6.8 | 300 | 20 | Initial Welding Step | 40 | 0.6 | Comparative Example |
| 8 | I | II | 1.5 | 7.0 | 80 | 1.0 | 60 | 3.0 | 7.2 | 300 | 20 | Initial Welding Step | 40 | 0.9 | Example of Invention |
| 9 | I | II | 1.5 | 7.0 | 80 | 1.0 | 60 | 3.0 | 7.2 | 300 | 200 | Initial Welding Step | 40 | 0.9 | Example of Invention |

(continued)

| No. | Upper Sheet | Lower Sheet | Welding Conditions | | | | | | | | | Step where Spatter Occurred | Spatter Behavior | | Remarks |
|---|---|---|---|---|---|---|---|---|---|---|---|---|---|---|---|
| | | | Initial Welding Step | | | Cooling Step | | Main Welding Step | | | Retaining Step | | Time from Welding Start to Spatter Occurrence (ms) | Voltage Drop Vs/Va | |
| | | | Welding Force F$_1$ (kN) | Current I$_i$ (kA) | Welding Time (ms) | Current I$_c$ (kA) | Cooling Time (ms) | Welding Force (kN) | Current I$_2$ (kA) | Welding Time (ms) | Retention Time (ms) | | | | |
| 10 | I | II | 3.0 | 10.0 | 60 | - | - | 3.0 | 7.3 | 300 | 20 | Initial Welding Step | 40 | 0.8 | Example of Invention |
| 11 | I | II | 7.0 | 15.0 | 60 | - | - | 3.0 | 7.3 | 300 | 20 | Initial Welding Step | 40 | 0.6 | Comparative Example |
| 12 | II | II | 2.0 | 7.0 | 80 | 0.0 | 60 | 4.0 | 7.5 | 300 | 20 | Initial Welding Step | 20 | 0.9 | Example of Invention |
| 13 | II | II | 3.0 | 10.0 | 60 | - | - | 3.0 | 7.5 | 300 | 20 | Initial Welding Step | 40 | 0.9 | Example of Invention |
| 14 | II | II | 3.0 | 10.0 | 60 | 0.0 | 60 | 3.0 | 7.5 | 300 | 20 | Initial Welding Step | 40 | 0.9 | Example of Invention |
| 15 | III | III | 3.5 | 10.0 | 60 | 0.0 | 100 | 5.0 | 7.5 | 300 | 20 | Initial Welding Step | 40 | 0.8 | Example of Invention |

[Table 2]

| No. | Test Result | | | | | | | | |
| | Delayed Fracture Test | | | Delayed Fracture Characteristics (*1) | Diameter Of a Nugget | | | Nugget Stability (*1) | Remarks |
| | 1st Time | 2nd Time | 3rd Time | | 1st Time | 2nd Time | 3rd Time | | |
|---|---|---|---|---|---|---|---|---|---|
| 1 | ○ | ○ | ○ | A | ○ | ○ | ○ | A | Example of Invention |
| 2 | ○ | ○ | ○ | A | ○ | ○ | ○ | A | Example of Invention |
| 3 | ○ | ○ | ○ | A | ○ | × | × | B | Comparative Example |
| 4 | ○ | ○ | ○ | A | ○ | ○ | ○ | A | Example of Invention |
| 5 | ○ | ○ | ○ | A | ○ | ○ | ○ | A | Example of Invention |
| 6 | × | × | × | B | ○ | ○ | ○ | A | Comparative Example |
| 7 | ○ | ○ | × | B | × | × | ○ | B | Comparative Example |
| 8 | ○ | ○ | ○ | A | ○ | ○ | ○ | A | Example of Invention |
| 9 | ○ | ○ | ○ | A | ○ | ○ | ○ | A | Example of Invention |
| 10 | ○ | ○ | ○ | A | ○ | ○ | ○ | A | Example of Invention |
| 11 | ○ | ○ | ○ | A | ○ | × | × | B | Comparative Example |
| 12 | ○ | ○ | ○ | A | ○ | ○ | ○ | A | Example of Invention |
| 13 | ○ | ○ | ○ | A | ○ | ○ | ○ | A | Example of Invention |
| 14 | ○ | ○ | ○ | A | ○ | ○ | ○ | A | Example of Invention |
| 15 | ○ | ○ | ○ | A | ○ | ○ | ○ | A | Example of Invention |

*1. A: Excellent, B: Fail

In Examples of Invention, as can be seen in Table 2, the effect of stably forming a nugget was achieved while the occurrence of delayed fracture in a weld joint was suppressed.

Reference Signs List

1:    lower steel sheet
2:    upper steel sheet
3:    nugget
4:    lower electrode

5: upper electrode
6: spacer
7: weld point
8: tack weld point

## Claims

1. A method for producing a resistance spot weld joint for joining two or more steel sheets including at least one steel sheet having a tensile strength of 980 MPa or higher, the method involving placing the steel sheets on top of each other to form steel sheets to be welded, clamping the steel sheets with a pair of electrodes, and passing a current through the steel sheets while applying pressure thereto to join the steel sheets together, the method for producing the resistance spot weld joint comprising:

   an initial welding step of welding by passing a current $I_1$ (kA) satisfying relation (2) while applying a welding force $F_1$ (kN) satisfying relation (1),

$$0.2 \times \sqrt{t_1} < F_1 \leq 4 \times \sqrt{t_1} \quad \cdots \quad (1)$$

$$2 \times \sqrt{F_1} < I_1 \leq 10 \times \sqrt{F_1} \quad \cdots \quad (2)$$

   where $t_i$ is a total sheet thickness (mm) of the steel sheets to be welded;
   wherein a welding time in the initial welding step is 20 ms or more and within 100ms, and
   a main welding step of forming a nugget (3) having a predetermined nugget (3) diameter,
   wherein spatter for discharging a hydrogen source present at the interface of the steel sheets is produced within 100 ms of the start of welding in the initial welding step,
   wherein a welding voltage $V_s$ (V) at the time of occurrence of the spatter satisfies relation (4),

$$V_s \geq 0.8 \times V_a \quad \cdots \quad (4)$$

   where $V_a$ is the welding voltage (V) 5 ms before the occurrence of spatter, and $V_s$ is the welding voltage (V) at the time of occurrence of spatter.

2. The method for producing the resistance spot weld joint according to Claim 1, further comprising
   a cooling step between the initial welding step and the main welding step, the cooling step being a step of welding at a current $I_c$ (kA) satisfying relation (3):

$$0 \leq I_c \leq I_1 \quad \cdots \quad (3)$$

   where $I_c$ is a current (kA) in the cooling step and $I_1$ is a current (kA) in the initial welding step.

## Patentansprüche

1. Verfahren zum Herstellen einer Widerstandspunktschweißverbindung zum Verbinden von zwei oder mehr Stahlblechen, einschließlich mindestens eines Stahlblechs mit einer Zugfestigkeit von 980 MPa oder mehr, wobei das Verfahren Aufeinanderlegen der Stahlbleche zum Ausbilden von zu verschweißenden Stahlblechen, Klemmen der Stahlbleche mit einem Elektrodenpaar und Leiten eines Stroms durch die Stahlbleche während Druck auf diese ausgeübt wird, um die Stahlbleche miteinander zu verbinden, involviert, wobei das Verfahren zum Herstellen der WiderstandsPunktschweißverbindung Folgendes aufweist:

   einen initialen Schweißschritt des Schweißens durch Hindurchleiten eines Stroms $I_1$ (kA), der die Beziehung (2) erfüllt, während eine Schweißkraft $F_1$ (kN) aufgebracht wird, welche die Beziehung (1) erfüllt,

$$0,2 \times \sqrt{t_1} < F_1 \le 4 \times \sqrt{t_1} \quad \cdots \quad (1)$$

$$2 \times \sqrt{F_1} < I_1 \le 10 \times \sqrt{F_1} \quad \cdots \quad (2)$$

wobei $t_1$ eine Gesamtblechdicke (mm) der zu schweißenden Stahlbleche ist;
wobei eine Schweißzeit in dem initialen Schweißschritt 20 ms oder mehr beträgt und innerhalb von 100 ms liegt, und
einen Hauptschweißschritt des Ausbildens eines Nuggets (3) mit einem vorgegebenen Durchmesser des Nuggets (3),
wobei Spritzer zum Ablassen einer Wasserstoffquelle, die an der Grenzfläche der Stahlblätter vorhanden ist, innerhalb von 100 ms nach dem Beginn des Schweißens in dem initialen Schweißschritt erzeugt werden,
wobei eine Schweißspannung Vs (V) zum Zeitpunkt des Auftretens der Spritzer die Beziehung (4) erfüllt,

$$Vs \ge 0.8 \times Va \quad \cdots \quad (4)$$

wobei Va die Schweißspannung (V) 5 ms vor dem Auftreten der Spritzer ist und Vs die Schweißspannung (V) zum Zeitpunkt des Auftretens der Spritzer ist.

2. Verfahren zur Herstellung der Widerstandspunktschweißverbindung nach Anspruch 1, ferner aufweisend einen Kühlungsschritt zwischen dem initialen Schweißschritt und dem Hauptschweißschritt, wobei der Kühlungsschritt ein Schritt des Schweißens mit einem Strom $I_c$ (kA) ist, der die Beziehung (3) erfüllt:

$$0 \le I_c \le I_1 \quad \cdots \quad (3)$$

wobei $I_c$ ein Strom (kA) in dem Kühlungsschritt ist und $I_1$ ein Strom (kA) in dem initialen Schweißschritt ist.


**Revendications**

1. Procédé de production de soudage par points par résistance pour assembler deux ou plusieurs tôles d'acier incluant au moins une tôle d'acier ayant une résistance à la traction supérieure ou égale à 980 MPa, le procédé implique d'empiler les tôles d'acier les unes sur les autres pour former des tôles d'aciers à souder, de pincer les tôles d'acier avec une paire d'électrodes, et de faire passer un courant à travers les tôles d'acier en exerçant une pression sur celles-ci pour assembler les tôles d'acier, le procédé de production de soudage par points par résistance comprenant :

une étape de soudage initiale consistant à souder en passant un courant $I_1$ (kA) satisfaisant une relation (2) en exerçant un effort de soudage Fi (kN) satisfaisant une relation (1),

$$0,2 \times \sqrt{t_1} < F_1 \le 4 \times \sqrt{t_1} \ldots (1)$$

$$2 \times \sqrt{F_1} < I_1 \le 10 \times \sqrt{F_1} \ldots (2)$$

où ti est une épaisseur de tôle totale (mm) des tôles d'acier à souder ;
dans lequel un temps de soudage dans l'étape de soudage initiale est supérieur ou égal à 20 ms et inférieur ou égal à 100 ms, et
une étape de soudage principale pour former une pépite (3) ayant un diamètre de pépite (3) prédéterminé,
dans lequel une expulsion pour décharger une source d'hydrogène présente sur l'interface des tôles d'acier est produite dans les 100 ms suivant le début du soudage dans l'étape de soudage initiale,
dans lequel une tension de soudage Vs (V) au moment de la survenue de l'expulsion satisfait une relation (4),

$$Vs \ge 0,8 \times Va \ldots (4)$$

où Va est la tension de soudage (V) 5 ms avant la survenue de l'expulsion, et Vs est la tension de soudage (V) au moment de la survenue de l'expulsion.

2. Procédé de production de soudage par points par résistance selon la revendication 1, comprenant en outre une étape de refroidissement entre l'étape de soudage initiale et l'étape de soudage principale, l'étape de refroidissement étant une étape de soudage à un courant $I_c$ (kA) satisfaisant une relation (3) :

$$0 \leq I_c \leq I_1 \ \ldots \ (3)$$

où $I_c$ est un courant (kA) dans l'étape de refroidissement et $I_1$ est un courant (kA) dans l'étape de soudage initiale.

# FIG. 1

# FIG. 2

(a)

(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015093282 A

- WO 2016174842 A1